# EUROPEAN PATENT SPECIFICATION

(11) **EP 3 517 894 B1**
(45) Date of publication and mention of the grant of the patent: **25.08.2021**
(21) Application number: 18153376.1
(22) Date of filing: 25.01.2018
(51) Int. Cl.: G01C 21/36, G01C 23/00, G08G 5/00, G09B 29/10, G06F 3/0481

(54) **LINE MANIPULATION FOR PATH PLANNING**
LINIENMANIPULATION ZUR WEGPLANUNG
MANIPULATION DE LIGNES POUR PLANIFICATION DE TRAJETS

(43) Date of publication of application: 31.07.2019
(73) Proprietor: Nokia Technologies Oy, 02610 Espoo (FI)
(72) Inventor: SUVITIE, Arto, 00930 Helsinki (FI)
(74) Representative: Nokia EPO representatives

(56) References cited:
- EP-A2- 1 262 740
- EP-A2- 1 441 202

## Description

### Field

The present application relates generally to path planning for vehicles and, more particularly, to line manipulation for path planning for vehicles such as - but not limited to - autonomous vehicles.

### Background

In general, an autonomous vehicle (also referred to as an unmanned vehicle or an unmanned autonomous vehicle) is a vehicle (e.g., a terrestrial drone, an aerial drone) capable of monitoring external information and recognizing a road situation, and capable of autonomously travelling to a target destination along a route (also referred to hereafter interchangeably as a path) planned by itself without human intervention of a vehicle owner.

A route is often a series of two or more waypoints. Some example routing systems (e.g., GPS systems, handheld devices and online map services) may first determine a set of waypoints between a start point and a destination/end point. Next, the routing systems provide for guiding/guidance to a nearest waypoint along the route, then to the next one on a recurring basis until reaching the destination point.

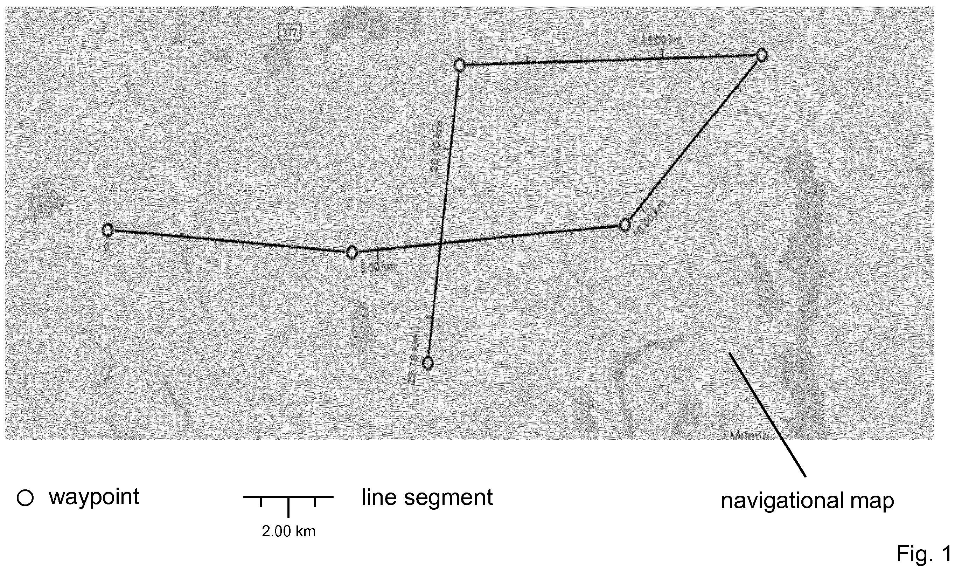

In particular, some online map services may have a feature to create a line path on a navigational map from at least two waypoints by connecting a waypoint to a next following one by a straight line (also referred to hereafter as a line segment), as depicted, for example, in **Figure 1** showing a screenshot of a line path obtained from Google Maps™ mapping service distance measurement tool. As can be seen, multiple distances can be displayed along the whole path. By means of a pointing device (e.g., a mouse, a touchpad or a trackball among others), left-clicking on the navigational map at a location of the pointing device's cursor other than the location of the line segments of the path allows a new waypoint to be created there, and thereby allows the whole path to be extended from the last destination waypoint to that new waypoint. On the other hand, by left-clicking on the navigational map at a location of the cursor that is a line segment of the path, a new waypoint can be created there and the newly created waypoint can be dragged along the line segment until reaching an intermediate location, thereby splitting said line segment in two. Existing waypoints can be selected by left-clicking them and dragged to change their respective location. On the other hand, existing waypoints can be deleted by right-clicking them.

However, **Figure 1** does not allow to immediately identify the waypoint that is the last one from which the path can be extended. In addition, a plurality of distances is displayed for the entire length of the path, thereby cluttering the screen. Moreover, the cursor is not locked to a current path segment, so that it may be easy for a user to inadvertently slip the mouse cursor to a close existing or crossing line segment of the path itself or of any other path.

EP 1 262 740 A2 describes determination of a margin region (also called pull-in region) for each display region to each street, respectively, on the left and right side of the respective street. If the cursor reaches the margin of the display screen by the user's operation of the control element, the force-applying unit generates a force which simulates a limit stop. If the user overcomes this force, the map detail will be replaced by a respective neighboring map detail. In FIG. 2 of EP 1 262 740 A2, a region 64 is shown in which both streets 54 and 56 intersect. Hence, the respective margin regions 60 intersect as well. The control unit 32 recognizes such an intersection and will move the cursor 62 on the street having the highest priority. The priority may be preset by the user or may be automatically generated, for example, dependent on the street type. It would be conceivable to assign the highest priority to the biggest streets (for example highways) and to assign the least priority to the least streets. In case that two streets having the same priority intersect, the decision on which street the cursor is attracted may be made randomly. A preferred solution, however, is to attract or move the cursor 62 on the intersection of both streets, where the user has then the possibility to move the cursor further on the desired street. Here, the afore-mentioned priority rule may be applied in the way that the actuation of the control element is easier in the direction of the street with the higher priority than in other directions. If the user moves the cursor 62a in the margin region 60 of the street 54 by a respective operation of the control element 22, as for example shown by cursor 62b, the check carried out by the control unit 32 yields the result that the cursor 62b is in the margin region 60, i.e. the distance between the cursor and the street is below a predetermined distance A. The advantage of the control described in EP 1 262 740 is particularly that the user feels by way of the automatic actuation or operation of the control element 22 caused by the force applying unit 30 that the cursor 62 is automatically attracted on the street. Hence, the user has not to look at the display screen 20.

Thus, there is a need to improve a cursor interaction with a line path including multiple waypoints, when planning a path for, for example, an autonomous vehicle.

### Summary

There is provided, according to a first aspect, a method for determining a location of a cursor on a navigational map as defined in the appended claim 1.

The method may further comprise the step of determining, when the cursor is located within one segment boundary rectangle, whether the cursor is located near or within one endpoint inside the one segment boundary rectangle based on a first predetermined distance threshold.

Determining whether the cursor is located near or within one endpoint inside the one segment boundary rectangle may comprise measuring a respective distance between a location of the cursor and each endpoint of the line segment inside the one segment boundary rectangle, comparing the respective distance between the location of the cursor and each endpoint of the line segment inside the one segment boundary rectangle to each other in order to determine the shorter distance corresponding to the distance between the location of the cursor and said one endpoint.

Determining whether the cursor is located near or within one endpoint inside the one segment boundary rectangle may further comprise comparing the shorter distance to the first predetermined distance threshold, the cursor being located near or within said one endpoint when the shorter distance is within the first predetermined distance threshold.

The method may further comprise the step of determining, when the cursor is not located near or within one endpoint inside the one segment boundary rectangle, whether the cursor is located near or within the line segment inside the one segment boundary rectangle based on a second predetermined distance threshold.

Determining whether the cursor is located near or within the line segment inside the one segment boundary rectangle may comprise projecting a location of the cursor to the line segment in order to obtain a projected location of the cursor, measuring a distance between the location of the cursor and the projected location of the cursor and comparing between the location of the cursor and the projected location of the cursor the distance to the second predetermined distance threshold.

The cursor may be located near or within the line segment inside the one segment boundary rectangle when the distance between the location of the cursor and the projected location of the cursor is within the second predetermined distance threshold.

According to the invention, the method comprises the step of locking, when the cursor is located within one segment boundary rectangle, the cursor to the one segment boundary rectangle. The method may further comprise the step of storing the one segment boundary rectangle in order to indicate the locking to the one segment boundary rectangle.

The method may further comprise the step of unlocking, when the cursor is moved to a location away from the stored segment boundary rectangle, the cursor from the stored segment boundary rectangle based on a third predetermined distance threshold.

Unlocking the cursor from the stored segment boundary rectangle may comprise comparing a distance between the location of the cursor and the stored segment boundary rectangle to the third predetermined distance threshold, the cursor being unlocked from the stored segment boundary rectangle when the distance between the location of the cursor and the stored segment boundary rectangle is outside the third predetermined distance threshold and the cursor remaining locked to the stored segment boundary rectangle when the distance between the location of the cursor and the stored segment boundary rectangle is within the third predetermined threshold.

Each boundary rectangle and each segment boundary rectangle may be calculated in minimum and maximum latitude and longitude coordinates, the path being composed of a series of latitude and longitude points.

The path may be split into parts when a length of the path is above a predetermined length threshold, in such a manner as to have one boundary rectangle for the whole path and one segment boundary rectangle for each part of the path.

The parts may be halves of the path.

According to a second aspect, there is provided an apparatus for determining a location of a cursor on a navigational map as defined in the appended claim 13.

The apparatus according to the second aspect may comprise a display device configured to display a path on a navigational map.

According to a third aspect, there is provided a computer program product comprising program instructions for causing a computer to perform the method as described above.

The computer program product may be stored on a medium and may cause an apparatus to perform the method as described herein.

A chipset may comprise any apparatus as described herein.

Embodiments of the present application aim to address problems associated with the state of the art.

### Summary of the Figures

For a better understanding of the present application, reference will now be made by way of example to the accompanying drawings in which:
**Figure 1** shows schematically an exemplary screenshot of a line path obtained from Google Maps' distance measurement tool;
**Figure 2** shows a flow diagram of a procedure for determining a location of a cursor on a navigational map, according to some embodiments;
**Figure 3** shows schematically an exemplary apparatus capable of supporting some embodiments;
**Figure 4** shows schematically three line segments along with their respective endpoints which are surrounded by a respective segment boundary rectangle inside one boundary rectangle for a path, according to some embodiments;
**Figure 5** shows schematically **(a):** a cursor approaching an active endpoint that becomes highlighted when the cursor is in the vicinity of the active endpoint, and **(b):** a cursor approaching an active line segment that becomes highlighted when the cursor is in the vicinity of the active line segment, according to some embodiments; and
**Figure 6** shows schematically **(a):** an active line segment being dragged until reaching a target location, and **(b):** a new waypoint created at the target location and connected between the preceding endpoint and the subsequent endpoint of the dragged line segment by a respective straight line, according to some embodiments.

### Embodiments of the Application

The following describes in further detail a suitable apparatus and possible mechanisms for planning a path through line manipulation.

In the following, a path may be defined as a line path, namely as a path comprising at least two waypoints and in which a waypoint is connected to a next successive waypoint by a straight line or a line segment (both terms being interchangeable), such that a line path may comprise at least one line segment, i.e., one line segment in the case of two waypoints or a succession of at least two line segments in the case of more than two waypoints. Moreover, the path may be composed of a series of latitude and longitude points.

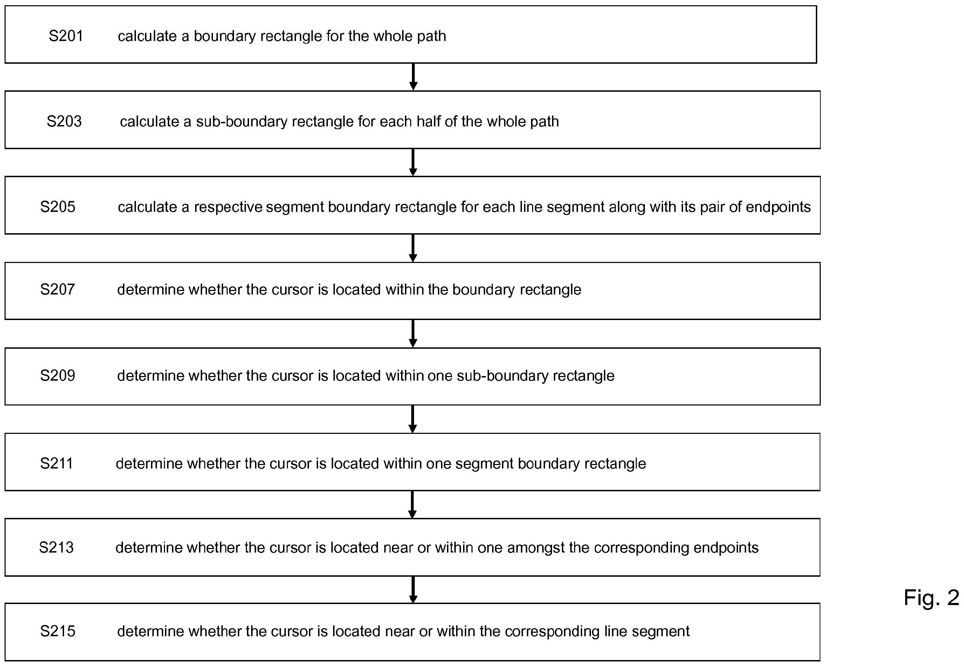

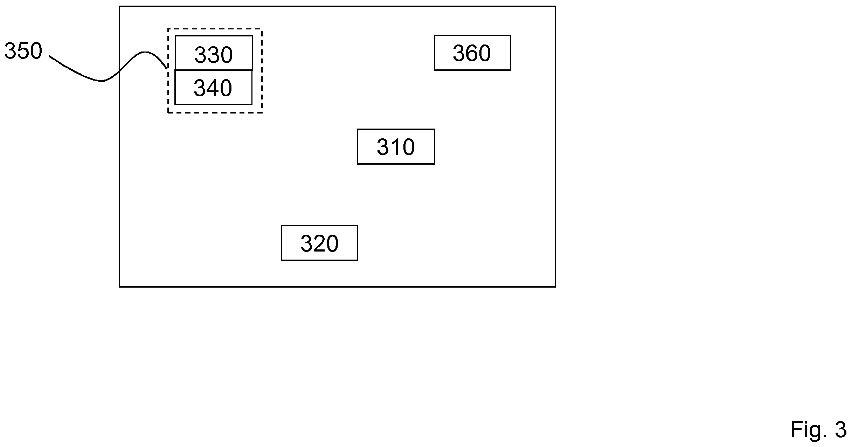

**Figure 2** shows a flow diagram of a procedure for determining a location of a cursor (e.g., a cursor of a pointing device such as a mouse, a touchpad and a trackball among others) on a navigational map, according to some embodiments. This determination procedure (described by steps **S201 to S215)** may be implemented by concrete hardware circuits having one or more functions of the blocks of the flow diagram or by a software routine which controls at least one processor (or at least one central processing unit) **310** of a computer to generate the steps of the flow diagram. The hardware circuits or the at least one processor **310** and its corresponding computer may be part of an apparatus **300** as shown in **Figure 3****,** which may further comprise a user interface (Ul) **360** and/or a transceiver 350 comprising a transmitter **330** and a receiver **340** . The steps **S201 to S215** as described below may be implemented or performed by the at least one processor **310** and also by corresponding means of the apparatus **300.** The apparatus **300** may also comprise at least one memory **320** including a computer program code, and the at least one memory **320** and the computer program code may be configured to, with the at least one processor **310,** cause the apparatus **300** to implement or perform the steps **S201 to S215** as described below. The at least one processor **310,** the at least one memory **320,** the transmitter **330,** the receiver **340** and/or the user interface (UI) **360** may be interconnected by electrical leads internal to the apparatus **300** in a multitude of different ways.

When a path is created or modified on a navigational map displayed on a screen or a surface video of a display device (e.g., a computer monitor or a touchscreen display among others), a boundary rectangle may be calculated for the whole path in minimum and maximum latitude and longitude coordinates, as shown in **Figure 2** by step **S201.** Furthermore, when its length is or increases above a predetermined length threshold, then the path may be split into parts and each part may in turn and repeatedly be split. For example, the path may be split into halves and each half may in turn and repeatedly be split into halves. Thereby, multiple parts of the path (i.e., sub-paths) may be obtained in order to enhance an accuracy of the location of the cursor. All these so-obtained sub-paths may then be allocated with a respective boundary rectangle (i.e., a respective sub-boundary rectangle) which may be calculated in minimum and maximum latitude and longitude coordinates, in such a manner that each sub-boundary rectangle comprises at least one line segment, as shown in **Figure 2** by step **S203.** Moreover, when the map is moved on the screen (e.g., a user pans the map on the screen), the corresponding boundary and sub-boundary rectangles may be calculated in (X, Y) screen coordinates.

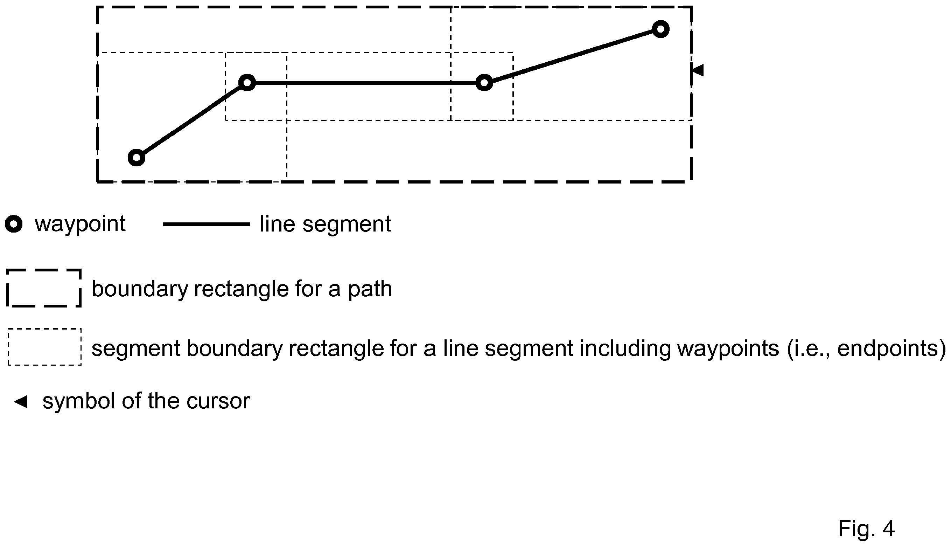

In turn, each line segment along with its pair of waypoints as endpoints may be allocated with a respective segment boundary rectangle which may be calculated in minimum and maximum latitude and longitude coordinates, as shown in **Figure 2** by step **S205** and as illustrated in **Figure 4** showing schematically three line segments along with their respective endpoints which are surrounded by a respective segment boundary rectangle inside one boundary rectangle for a path, according to some embodiments.

When the cursor is moved on the map (e.g., towards the bottom, middle or top of the map), it may be determined, using, for example, the latitude and longitude coordinates, whether its location is within the boundary rectangle of the whole path, as shown in **Figure 2** by step **S207.** If so, then it may be determined, using, for example, the latitude and longitude coordinates, whether its location is within one amongst the sub-boundary rectangles, as shown in **Figure 2** by step **S209.** If so, then it may be determined, using, for example, the latitude and longitude coordinates, whether its location is within one segment boundary rectangle, as shown in **Figure 2** by step **S211.** If so, then it may be determined, starting with the endpoints of the line segment inside said one segment boundary rectangle, whether its location is near or within one endpoint, as shown in **Figure 2** by step **S213.** Otherwise, when the cursor is not located near or within one endpoint inside said one segment boundary rectangle, then it may be determined whether the cursor is located near or within the line segment inside said one segment boundary rectangle, as shown in **Figure 2** by step **S215.** Thus, the procedure as described in **Figure 2** has the benefit of reducing the amount of calculations necessary to determine which element(s) amongst all the boundary rectangles, the endpoints and the line segments is(are) under the cursor, the segment boundary rectangle covering an area smaller than the (sub-)boundary rectangle. However, it shall be noted that, in the case where the cursor is not located within the boundary rectangle of the whole path, then all sub-boundary and segment boundary rectangles, line segments and waypoints may be skipped.

Referring to step **S213** of **Figure 2****,** a respective distance between a location of the cursor and each endpoint of the line segment inside said one segment boundary rectangle may be measured and compared to each other in order to determine the shorter distance, which corresponds to the distance between the location of the cursor and said one endpoint. The shorter distance may then be compared to a first predetermined distance threshold in such a manner that the cursor is determined to be located near or within said one endpoint when the shorter distance is within the first predetermined distance threshold. Said one endpoint may then be considered an active element.

Referring to step **S215** of **Figure 2****,** the location of the cursor may be projected to the line segment inside said one segment boundary rectangle in order to obtain a projected location of the cursor. A distance between the location of the cursor and the projected location of the cursor may then be measured and compared to a second predetermined distance threshold in such a manner that the cursor is determined to be located near or within the line segment inside said one segment boundary rectangle when the distance is within the second predetermined distance threshold. The line segment may then be considered an active element. In an exemplary embodiment, the first and second predetermined distance thresholds may be identical, whereas they may be different in another exemplary embodiment.

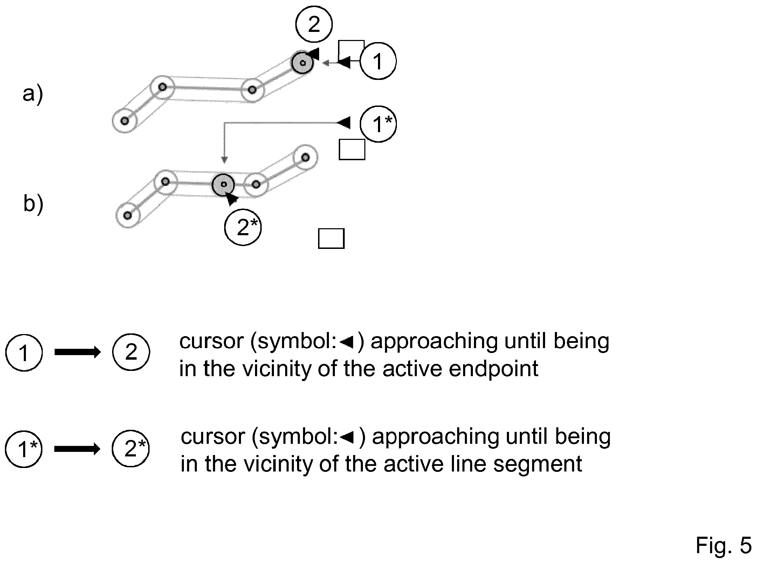

A preview symbol (e.g., a dot, a point or a coloured/hatched area among others) may be drawn on the active element (i.e., either said one endpoint or the line segment) in order to render it readily identifiable as active, as illustrated in **Figure 5****,** which shows schematically **(a):** a cursor approaching (1 → 2) an active endpoint that becomes highlighted (e.g., in grey) when the cursor is in the vicinity of the active endpoint, and **(b):** a cursor approaching (1* → 2*) an active line segment that becomes highlighted (e.g., in grey) when the cursor is in the vicinity of the active line segment, according to some embodiments.

To avoid that the cursor be slipped unintentionally from said one segment boundary rectangle to another segment boundary rectangle of the path to which said one segment boundary rectangle is attached or to another segment boundary rectangle of another path also displayed on the screen, the cursor may be locked to said one segment boundary rectangle within which it lies currently, said one segment boundary rectangle corresponding to the segment boundary rectangle inside which the current active element (i.e., either said one endpoint or the line segment) lies. To perform such locking, said one segment boundary rectangle may be stored in a memory or any suitable storage means of the aforementioned apparatus **300,** in order to obtain a stored segment boundary rectangle. When the cursor is moved from its current location within the stored segment boundary rectangle to another location away from the stored segment boundary rectangle, a distance between said other location of the cursor and the stored segment boundary rectangle (i.e., the last segment boundary rectangle within which the cursor was located prior to moving) may be compared to a third predetermined distance threshold. When the distance is within the third predetermined threshold, the cursor may then remain locked to the stored segment boundary rectangle and may thereby remain locked to the path to which the stored segment boundary rectangle is attached. Thus, the remembrance of the stored segment boundary rectangle and the path attached to that stored segment boundary rectangle may help follow the path even though there could be a few other crossing paths nearby. On the other hand, when the distance is outside the third predetermined distance threshold (i.e., the cursor is located far enough from the stored segment boundary rectangle), the cursor may then be unlocked from the stored segment boundary rectangle and a new search of segment boundary rectangle followed by a new search of active element (i.e., either an endpoint or a line segment) may be achieved according to successive steps **S211, S213** and **S215** of **Figure 2****.** This search associated with the determination steps **S211, S213** and **S215** allows a better optimization with respect, for example, to the following consideration stating that a path reacts slowly to the mouse usage and sometimes shows a transfer of map location instead of a creation of a new waypoint when the path is clicked and the mouse is pulled.

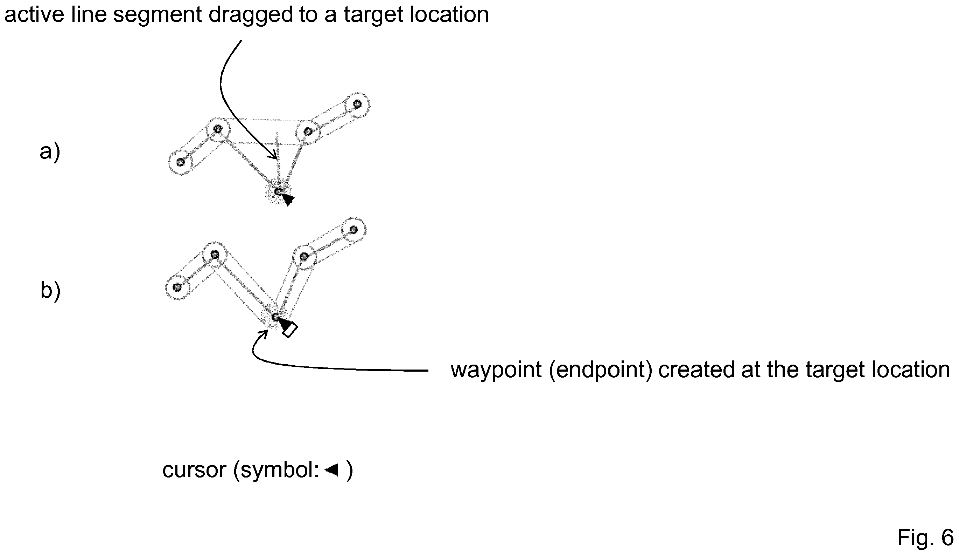

Left-clicking by means of a pointing device (e.g., a mouse) may allow to select the active element, i.e., either an endpoint or a line segment. If the endpoint is active, then left-clicking may also allow to open its possible details for editing, whereas maintaining the left-click and dragging the active endpoint may allow to move the endpoint along or outside the path on the map, i.e., to merely adjust the location of the active endpoint. On the other hand, if the line segment is active, then left-clicking and dragging the active line segment may allow to insert a new waypoint between the endpoints of the line segment, in such a manner that the new waypoint gets connected both to the preceding endpoint and the subsequent endpoint by a respective straight line, the new waypoint being actually inserted by releasing, for example, the mouse button. Thereby, the path may be modified as illustrated in **Figure 6****,** which shows schematically **(a):** an active line segment being dragged until reaching a target location, and **(b):** a new waypoint created at the target location and connected between the preceding endpoint and the subsequent endpoint of the dragged line segment by a respective straight line, according to some embodiments.

Right-clicking by means of the pointing device (e.g., the mouse) may allow to delete an existing waypoint. Thereby, the preceding waypoint and the waypoint being next to the deleted waypoint may get connected by a straight line as a line segment.

In an exemplary embodiment, a preview line may be displayed from the last waypoint to the cursor, thereby making it obvious how the path will extend from that last waypoint when an additional waypoint is created. Furthermore, when multiple paths are substantially simultaneously displayed on the screen, this preview line may also allow to substantially immediately identify the active path.

In a further exemplary embodiment, the distances between endpoints of line segment may be displayed not along the whole path but only for the segment boundary rectangle within which the cursor lies. Thereby, the screen may be less cluttered and the planning of line segments may be accurately carried out by the user.

Amongst the waypoints, some of them may provide useful information and be easily found among other waypoints, and, in a further exemplary embodiment, waypoint markers for locations containing commands (e.g., change speed, set region of interest (ROI) or drop payload amongst others) may then be highlighted. For example, an icon may be displayed next to or as part of the waypoint to indicate the type of command at its location.

In a further exemplary embodiment, the endpoints may be displayed with visible dots (i.e., the endpoints may be rendered visible thanks to the dots) when the cursor is hovered over the path. Otherwise, only the start, end and command waypoints are displayed in addition to the line segments along the path. Thereby, the screen may be less cluttered. Furthermore, in an exemplary embodiment, the boundary, sub-boundary and segment boundary rectangles may be invisible on the screen. Thereby, in particular for the segment boundary rectangle, the cursor does not need to be exactly above a line segment but only needs to be brought sufficiently close to the line segment, which may make the usage for a user easier.

In a further exemplary embodiment, the line segments may be animated with dashes, dashed lines or animated points moving in the direction of the path from the start waypoint to the end/destination waypoint. Thereby, a path such as a flight path may be easy to follow even though it appears complicated and even when looking at an arbitrary point on the path. Indeed, the direction of the path may be shown to indicate the next waypoint and/or the end/destination waypoint, for example, by letting the dots flow along the path from the start waypoint to the end/destination waypoint or by showing the dots in sequence, on the path, one by one after each other from the start waypoint to the end/destination waypoint.

It shall be noted that the apparatus **300** may be any suitable electronics device. For example, in some exemplary embodiments, the apparatus **300** may be a mobile device, user equipment, tablet computer, computer and video playback apparatus amongst others.

As above-mentioned, the apparatus **300** may comprise a memory **320** or any suitable storage means. In an exemplary embodiment, the processor of the apparatus **300** may be coupled to the memory **320** or the suitable storage means. In an exemplary embodiment, the memory **320** or the suitable storage means may comprise a program code section for storing program codes implementable upon the processor **310.** Furthermore, in an exemplary embodiment, the memory **320** or the suitable storage means may further comprise a stored data section for storing data, for example, data that has been processed or to be processed in accordance with the embodiments as described herein. Such stored data may be the above-mentioned stored segment boundary rectangle. The implemented program code stored within the program code section and the data stored within the stored data section may be retrieved by the processor **310** whenever needed via the memory-processor coupling.

As above-mentioned, in an exemplary embodiment, the apparatus **300** may comprise a user interface (Ul) **360.** The user interface **360** may be coupled in an exemplary embodiment to the processor **310.** In an exemplary embodiment, the processor **310** may control the operation of the user interface **360** and receive inputs from the user interface **360.** In an exemplary embodiment, the user interface **360** may enable a user to input commands to the apparatus **300,** for example, via a keypad, mouse, touchpad, button or trackball amongst others. In an exemplary embodiment, the user interface **360** may enable the user to obtain information from the apparatus **300.** For example, the user interface **360** may comprise a screen or a display or a display device, configured to display information (e.g., about a path on a navigational map, as described herein) from the apparatus **300** to the user. The user interface **360** may, in an exemplary embodiment, comprise a touch screen or a touch interface capable of both enabling information to be entered to the apparatus **300** and further capable of displaying information to the user of the apparatus **300.** In an exemplary embodiment, the user interface **360** may be the user interface for communicating with an autonomous vehicle as above-mentioned.

As above-mentioned, in an exemplary embodiment, the apparatus **300** may comprise a transceiver **350.** The transceiver **350** in such an embodiment may be coupled to the processor **310** and configured to enable a communication with other apparatuses or electronic devices, for example, via a wireless communications network. The transceiver **350** or any suitable transceiver or transmitter **330** and/or receiver **340** means may, in some exemplary embodiments, be configured to communicate with other electronic devices or apparatuses via a wire or wired coupling.

The transceiver **350** may communicate with a further apparatus by any suitable known communications protocol. For example, the transceiver **350** or transceiver means may use a suitable universal mobile telecommunications system (UMTS) protocol, a wireless local area network (WLAN) protocol (e.g., IEEE 802.X), a suitable short-range radio frequency communication protocol (e.g., Bluetooth) and an infrared data communication pathway (IRDA) amongst others.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatuses, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor, or by hardware, or by a combination of software and hardware. Further, in this regard, it should be noted that any blocks of the logic flow diagram, e.g., as in the **Figure 2****,** may represent program steps, or interconnected logic circuits, blocks and functions, or a combination of program steps and logic circuits, blocks and functions. The software may be stored on such physical media as memory chips, or memory blocks implemented within the processor, magnetic media such as hard disks and floppy disks, and optical media such as, for example, digital video discs (DVDs) and the data variants thereof, compact discs (CDs).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment and may include one or more of general purpose computers, special purpose computers, microprocessors, digital signal processors (DSPs), application-specific integrated circuits (ASICs), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of exemplary embodiments of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method for determining a location of a cursor on a navigational map, the method comprising:
calculating (S201, S203) at least one boundary rectangle for a path on the navigational map, the path comprising at least two waypoints, each waypoint being connected to a next successive waypoint by a respective line segment in such a manner that each line segment has two endpoints;
calculating (S205) a respective segment boundary rectangle for each line segment along with its two endpoints, wherein each segment boundary rectangle is aligned with the boundary rectangle;
determining (S207, S209) whether the cursor is located within the at least one boundary rectangle;
determining (S211), when the cursor is located within the at least one boundary rectangle, whether the cursor is located within one segment boundary rectangle amongst the respective segment boundary rectangles; and
locking, when the cursor is located within the one segment boundary rectangle, the cursor to the one segment boundary rectangle.

2. The method as claimed in claim 1, further comprising:
determining (S213), when the cursor is located within the one segment boundary rectangle, whether the cursor is located near or within one endpoint inside the one segment boundary rectangle based on a first predetermined distance threshold.

3. The method as claimed in claim 2, wherein determining (S213) whether the cursor is located near or within one endpoint inside the one segment boundary rectangle comprises measuring a respective distance between a location of the cursor and each endpoint of the line segment inside the one segment boundary rectangle, comparing the respective distance between the location of the cursor and each endpoint of the line segment inside the one segment boundary rectangle to each other in order to determine the shorter distance corresponding to the distance between the location of the cursor and said one endpoint.

4. The method as claimed in claimed 3, wherein determining (S213) whether the cursor is located near or within one endpoint inside the one segment boundary rectangle further comprises comparing the shorter distance to the first predetermined distance threshold, the cursor being located near or within said one endpoint when the shorter distance is within the first predetermined distance threshold.

5. The method as claimed in any one of claims 1 to 4, further comprising:
determining (S215), when the cursor is not located near or within one endpoint inside the one segment boundary rectangle, whether the cursor is located near or within the line segment inside the one segment boundary rectangle based on a second predetermined distance threshold.

6. The method as claimed in claim 5, wherein determining (S215) whether the cursor is located near or within the line segment inside the one segment boundary rectangle comprises projecting a location of the cursor to the line segment in order to obtain a projected location of the cursor, measuring a distance between the location of the cursor and the projected location of the cursor and comparing the distance between the location of the cursor and the projected location of the cursor to the second predetermined distance threshold.

7. The method as claimed in claimed 6, wherein the cursor is located near or within the line segment inside the one segment boundary rectangle when the distance between the location of the cursor and the projected location of the cursor is within the second predetermined distance threshold.

8. The method as claimed in any one of claims 1 to 7, further comprising:
storing the one segment boundary rectangle in a memory in order to perform the locking to the one segment boundary rectangle.

9. The method as claimed in claim 8, further comprising:
unlocking, when the cursor is moved to a location away from the stored segment boundary rectangle, the cursor from the stored segment boundary rectangle based on a third predetermined distance threshold.

10. The method as claimed in claim 9, wherein unlocking the cursor from the stored segment boundary rectangle comprises comparing a distance between the location of the cursor and the stored segment boundary rectangle to the third predetermined distance threshold, the cursor being unlocked from the stored segment boundary rectangle when the distance between the location of the cursor and the stored segment boundary rectangle is outside the third predetermined distance threshold and the cursor remaining locked to the stored segment boundary rectangle when the distance between the location of the cursor and the stored segment boundary rectangle is within the third predetermined threshold.

11. The method of any one of claims 1 to 10, wherein each boundary rectangle and each segment boundary rectangle are calculated in minimum and maximum latitude and longitude coordinates, the path being composed of a series of latitude and longitude points.

12. The method as claimed in any one of claims 1 to 11, comprising calculating sub-boundary rectangles for parts of the path, each sub-boundary rectangle comprising at least one line segment.

13. An apparatus for determining a location of a cursor on a navigational map, the apparatus comprising means for performing:
calculating (S201, S203) at least one boundary rectangle for a path on the navigational map, the path comprising at least two waypoints, each waypoint being connected to a next successive waypoint by a respective line segment in such a manner that each line segment has two endpoints;
calculating (S205) a respective segment boundary rectangle for each line segment along with its two endpoints, wherein each segment boundary rectangle is aligned with the boundary rectangle;
determining (S207, S209) whether the cursor is located within the at least one boundary rectangle;
determining (S211), when the cursor is located within the at least one boundary rectangle, whether the cursor is located within the one segment boundary rectangle amongst the respective segment boundary rectangles; and
locking, when the cursor is located within the one segment boundary rectangle, the cursor to the one segment boundary rectangle.

14. An apparatus for determining a location of a cursor on a navigational map according to claim 13, the means for performing comprising at least one processor.

15. A computer program product comprising program instructions for causing a computer to perform a method according to any one of claims 1 to 12.

## Patentansprüche

1. Verfahren zum Bestimmen einer Position eines Cursors auf einer Navigationskarte, wobei das Verfahren Folgendes umfasst:
Berechnen (S201, S203) von mindestens einem Begrenzungsrechteck für einen Pfad auf der Navigationskarte, wobei der Pfad mindestens zwei Wegpunkte umfasst, wobei jeder Wegpunkt durch ein jeweiliges Liniensegment mit einem nächsten nachfolgenden Wegpunkt in einer Weise verbunden ist, dass jedes Liniensegment zwei Endpunkte aufweist;
Berechnen (S205) eines jeweiligen Segmentbegrenzungsrechtecks für jedes Liniensegment zusammen mit seinen zwei Endpunkten, wobei jedes Segmentbegrenzungsrechteck auf das Begrenzungsrechteck ausgerichtet ist;
Bestimmen (S207, S209), ob sich der Cursor in dem mindestens einen Begrenzungsrechteck befindet;
wenn sich der Cursor in dem mindestens einen Begrenzungsrechteck befindet, Bestimmen (S211), ob sich der Cursor in einem Segmentbegrenzungsrechteck unter den jeweiligen Segmentbegrenzungsrechtecken befindet; und
wenn sich der Cursor in dem einen Segmentbegrenzungsrechteck befindet, Verriegeln des Cursors an dem einen Segmentbegrenzungsrechteck.

2. Verfahren wie in Anspruch 1 beansprucht, das ferner Folgendes umfasst:
wenn sich der Cursor in dem einen Begrenzungsrechteck befindet, Bestimmen (S213) auf Basis eines ersten vorbestimmten Abstandsschwellwerts, ob sich der Cursor in der Nähe oder in einem Endpunkt in dem einen Segmentbegrenzungsrechteck befindet.

3. Verfahren wie in Anspruch 2 beansprucht, wobei das Bestimmen (S213), ob sich der Cursor in der Nähe oder in einem Endpunkt in dem einen Segmentbegrenzungsrechteck befindet, das Messen eines jeweiligen Abstands zwischen einer Position des Cursors und jedem Endpunkt des Liniensegments in dem einen Segmentbegrenzungsrechteck, das Vergleichen des jeweiligen Abstands zwischen der Position des Cursors und jedem Endpunkt des Liniensegments in dem einen Segmentbegrenzungsrechteck miteinander, um den kürzeren Abstand entsprechend dem Abstand zwischen der Position des Cursors und dem einen Endpunkt zu bestimmen, umfasst.

4. Verfahren wie in Anspruch 3 beansprucht, wobei das Bestimmen (S213), ob sich der Cursor in der Nähe oder in einem Endpunkt in dem einen Segmentbegrenzungsrechteck befindet, ferner das Vergleichen des kürzeren Abstands mit dem ersten vorbestimmten Abstandsschwellwert umfasst, wobei sich der Cursor in der Nähe oder in dem einen Endpunkt befindet, wenn der kürzere Abstand innerhalb des ersten vorbestimmten Abstandsschwellwerts liegt.

5. Verfahren wie in einem der Ansprüche 1 bis 4 beansprucht, das ferner Folgendes umfasst:
wenn sich der Cursor nicht in der Nähe oder in einem Endpunkt in dem einen Segmentbegrenzungsrechteck befindet, Bestimmen (S215) auf Basis eines zweiten vorbestimmten Abstandsschwellwerts, ob sich der Cursor in der Nähe oder im Liniensegment in dem einen Segmentbegrenzungsrechteck befindet.

6. Verfahren wie in Anspruch 5 beansprucht, wobei das Bestimmen (S215), ob sich der Cursor in der Nähe oder im Liniensegment in dem einen Segmentbegrenzungsrechteck befindet, das Projizieren einer Position des Cursors auf das Liniensegment, um eine projizierte Position des Cursors zu erhalten, das Messen eines Abstands zwischen der Position des Cursors und der projizierten Position des Cursors und das Vergleichen des Abstands zwischen der Position des Cursors und der projizierten Position des Cursors mit dem zweiten vorbestimmten Abstandsschwellwert umfasst.

7. Verfahren wie in Anspruch 6 beansprucht, wobei sich der Cursor in der Nähe oder im Liniensegment in dem einen Segmentbegrenzungsrechteck befindet, wenn der Abstand zwischen der Position des Cursors und der projizierten Position des Cursors innerhalb des zweiten vorbestimmten Abstandsschwellwerts liegt.

8. Verfahren wie in einem der Ansprüche 1 bis 7 beansprucht, das ferner Folgendes umfasst:
Speichern des einen Segmentbegrenzungsrechtecks in einem Speicher, um die Verriegelung an dem einen Segmentbegrenzungsrechteck durchzuführen.

9. Verfahren wie in Anspruch 8 beansprucht, das ferner Folgendes umfasst:
wenn der Cursor zu einer vom gespeicherten Segmentbegrenzungsrechteck entfernten Position bewegt wird, Entriegeln des Cursors vom gespeicherten Segmentbegrenzungsrechteck auf Basis eines dritten vorbestimmten Abstandsschwellwerts.

10. Verfahren wie in Anspruch 9 beansprucht, wobei das Entriegeln des Cursors vom gespeicherten Segmentbegrenzungsrechteck das Vergleichen eines Abstands zwischen der Position des Cursors und dem gespeicherten Segmentbegrenzungsrechteck mit dem dritten vorbestimmten Abstandsschwellwert umfasst, wobei der Cursor vom gespeicherten Segmentbegrenzungsrechteck entriegelt wird, wenn der Abstand zwischen der Position des Cursors und dem gespeicherten Segmentbegrenzungsrechteck außerhalb des dritten vorbestimmten Abstandsschwellwerts liegt, und wobei der Cursor am gespeicherten Segmentbegrenzungsrechteck verriegelt bleibt, wenn der Abstand zwischen der Position des Cursors und dem gespeicherten Segmentbegrenzungsrechteck innerhalb des dritten vorbestimmten Schwellwerts liegt.

11. Verfahren nach einem der Ansprüche 1 bis 10, wobei jedes Begrenzungsrechteck und jedes Segmentbegrenzungsrechteck in kleinsten und größten Breiten- und Längenkoordinaten berechnet wird, wobei der Pfad aus einer Reihe von Breiten- und Längenpunkten zusammengesetzt ist.

12. Verfahren wie in einem der Ansprüche 1 bis 11 beansprucht, das das Berechnen von Unterbegrenzungsrechtecken für Teile des Pfades umfasst, wobei jedes Unterbegrenzungsrechteck mindestens ein Liniensegment umfasst.

13. Vorrichtung zum Bestimmen einer Position eines Cursors auf einer Navigationskarte, wobei die Vorrichtung Mittel zum Durchführen von Folgendem umfasst:
Berechnen (S201, S203) von mindestens einem Begrenzungsrechteck für einen Pfad auf der Navigationskarte, wobei der Pfad mindestens zwei Wegpunkte umfasst, wobei jeder Wegpunkt durch ein jeweiliges Liniensegment mit einem nächsten nachfolgenden Wegpunkt in einer Weise verbunden ist, dass jedes Liniensegment zwei Endpunkte aufweist;
Berechnen (S205) eines jeweiligen Segmentbegrenzungsrechtecks für jedes Liniensegment zusammen mit seinen zwei Endpunkten, wobei jedes Segmentbegrenzungsrechteck auf das Begrenzungsrechteck ausgerichtet ist;
Bestimmen (S207, S209), ob sich der Cursor in dem mindestens einen Begrenzungsrechteck befindet;
wenn sich der Cursor in dem mindestens einen Begrenzungsrechteck befindet, Bestimmen (S211), ob sich der Cursor in dem einen Segmentbegrenzungsrechteck unter den jeweiligen Segmentbegrenzungsrechtecken befindet; und
wenn sich der Cursor in dem einen Segmentbegrenzungsrechteck befindet, Verriegeln des Cursors an dem einen Segmentbegrenzungsrechteck.

14. Vorrichtung zum Bestimmen einer Position eines Cursors auf einer Navigationskarte gemäß Anspruch 13, wobei die Mittel zum Durchführen mindestens einen Prozessor umfassen.

15. Computerprogrammprodukt, das Programmanweisungen zum Bewirken, dass ein Computer ein Verfahren gemäß einem der Ansprüche 1 bis 12 durchführt, umfasst.

## Revendications

1. Procédé pour déterminer un emplacement d'un curseur sur une carte de navigation, le procédé comprenant les étapes suivantes :
calculer (S201, S203) au moins un rectangle de délimitation pour un chemin sur la carte de navigation, le chemin comprenant au moins deux points de cheminement, chaque point de cheminement étant connecté à un point de cheminement successif suivant par un segment de ligne respectif, de telle manière que chaque segment de ligne a deux points d'extrémité ;
calculer (S205) un rectangle de délimitation de segment respectif pour chaque segment de ligne avec ses deux points d'extrémité, dans lequel chaque rectangle de délimitation de segment est aligné avec le rectangle de délimitation ;
déterminer (S207, S209) si le curseur est situé à l'intérieur du au moins un rectangle de délimitation ;
lorsque le curseur est situé à l'intérieur du au moins un rectangle de délimitation, déterminer (S211) si le curseur est situé à l'intérieur d'un rectangle de délimitation de segment parmi les rectangles de délimitation de segments respectifs ; et
lorsque le curseur est situé à l'intérieur dudit un rectangle de délimitation de segment, verrouiller le curseur sur ledit un rectangle de délimitation de segment.

2. Procédé selon la revendication 1, comprenant en outre l'étape suivante :
lorsque le curseur est situé à l'intérieur dudit un rectangle de délimitation de segment, déterminer (S213) si le curseur est situé à proximité ou à l'intérieur d'un point d'extrémité à l'intérieur dudit un rectangle de délimitation de segment sur la base d'un premier seuil de distance prédéterminé.

3. Procédé selon la revendication 2, dans lequel le fait de déterminer (S213) si le curseur est situé à proximité ou à l'intérieur d'un point d'extrémité à l'intérieur dudit un rectangle de délimitation de segment comprend la mesure d'une distance respective entre un emplacement du curseur et chaque point d'extrémité du segment de ligne à l'intérieur dudit un rectangle de délimitation de segment, et la comparaison entre elles des distances respectives entre l'emplacement du curseur et chaque point d'extrémité du segment de ligne à l'intérieur dudit un rectangle de délimitation de segment, afin de déterminer la distance la plus courte correspondant à la distance entre l'emplacement du curseur et ledit un point d'extrémité.

4. Procédé selon la revendication 3, dans lequel le fait de déterminer (S213) si le curseur est situé à proximité ou à l'intérieur d'un point d'extrémité à l'intérieur dudit un rectangle de délimitation de segment comprend en outre la comparaison de la distance la plus courte au premier seuil de distance prédéterminé, le curseur étant situé à proximité ou à l'intérieur dudit un point d'extrémité lorsque la distance la plus courte est à l'intérieur du premier seuil de distance prédéterminé.

5. Procédé selon l'une quelconque des revendications 1 à 4, comprenant en outre l'étape suivante :
lorsque le curseur n'est pas situé à proximité ou à l'intérieur d'un point d'extrémité à l'intérieur dudit un rectangle de délimitation de segment, déterminer (S215) si le curseur est situé à proximité ou à l'intérieur du segment de ligne à l'intérieur dudit un rectangle de délimitation de segment sur la base d'un deuxième seuil de distance prédéterminé.

6. Procédé selon la revendication 5, dans lequel le fait de déterminer (S215) si le curseur est situé à proximité ou à l'intérieur du segment de ligne à l'intérieur dudit un rectangle de délimitation de segment comprend la projection d'un emplacement du curseur sur le segment de ligne afin d'obtenir un emplacement projeté du curseur, la mesure d'une distance entre l'emplacement du curseur et l'emplacement projeté du curseur et la comparaison de la distance entre l'emplacement du curseur et l'emplacement projeté du curseur sur le deuxième seuil de distance prédéterminé.

7. Procédé selon la revendication 6, dans lequel le curseur est situé à proximité ou à l'intérieur du segment de ligne à l'intérieur dudit un rectangle de délimitation de segment lorsque la distance entre l'emplacement du curseur et l'emplacement projeté du curseur est à l'intérieur du deuxième seuil de distance prédéterminé.

8. Procédé selon l'une quelconque des revendications 1 à 7, comprenant en outre l'étape suivante :
stocker ledit un rectangle de délimitation de segment dans une mémoire afin de réaliser un verrouillage sur ledit un rectangle de délimitation de segment.

9. Procédé selon la revendication 8, comprenant en outre l'étape suivante :
lorsque le curseur est déplacé vers un emplacement éloigné du rectangle de délimitation de segment stocké, déverrouiller le curseur du rectangle de délimitation de segment stocké sur la base d'un troisième seuil de distance prédéterminé.

10. Procédé selon la revendication 9, dans lequel le déverrouillage du curseur du rectangle de délimitation de segment stocké comprend la comparaison d'une distance entre l'emplacement du curseur et le rectangle de délimitation de segment stocké sur le troisième seuil de distance prédéterminé, le curseur étant déverrouillé du rectangle de délimitation de segment stocké lorsque la distance entre l'emplacement du curseur et le rectangle de délimitation de segment stocké est en dehors du troisième seuil de distance prédéterminé, et le curseur restant verrouillé au rectangle de délimitation de segment stocké lorsque la distance entre l'emplacement du curseur et le rectangle de délimitation de segment stocké est à l'intérieur du troisième seuil prédéterminé.

11. Procédé selon l'une quelconque des revendications 1 à 10, dans lequel chaque rectangle de délimitation et chaque rectangle de délimitation de segment sont calculés en coordonnées de latitude et de longitude minimales et maximales, le chemin étant composé d'une série de points de latitude et de longitude.

12. Procédé selon l'une quelconque des revendications 1 à 11, comprenant le calcule de rectangles de délimitation secondaire pour des parties du chemin, chaque rectangle de délimitation secondaire comprenant au moins un segment de ligne.

13. Appareil pour déterminer un emplacement d'un curseur sur une carte de navigation, l'appareil comprenant des moyens pour réaliser les étapes suivantes :
calculer (S201, S203) au moins un rectangle de délimitation pour un chemin sur la carte de navigation, le chemin comprenant au moins deux points de cheminement, chaque point de cheminement étant connecté à un point de cheminement successif suivant par un segment de ligne respectif, de telle manière que chaque segment de ligne a deux points d'extrémité ;
calculer (S205) un rectangle de délimitation de segment respectif pour chaque segment de ligne avec ses deux points d'extrémité, dans lequel chaque rectangle de délimitation de segment est aligné avec le rectangle de délimitation ;
déterminer (S207, S209) si le curseur est situé à l'intérieur du au moins un rectangle de délimitation ;
lorsque le curseur est situé à l'intérieur du au moins un rectangle de délimitation, déterminer (S211) si le curseur est situé à l'intérieur dudit un rectangle de délimitation de segment parmi les rectangles de délimitation de segments respectifs ; et
lorsque le curseur est situé à l'intérieur dudit un rectangle de délimitation de segment, verrouiller le curseur sur ledit un rectangle de délimitation de segment.

14. Appareil pour déterminer un emplacement d'un curseur sur une carte de navigation selon la revendication 13, les moyens de réalisation comprenant au moins un processeur.

15. Produit de programme informatique comprenant des instructions de programme pour amener un ordinateur à réaliser un procédé selon l'une quelconque des revendications 1 à 12.
